# EUROPÄISCHE PATENTANMELDUNG

(11) **EP 3 324 214 A1**
(43) Veröffentlichungstag der Anmeldung: **23.05.2018**
(21) Anmeldenummer: 17202220.4
(22) Anmeldetag: 17.11.2017
(51) Int. Cl.: G01V 1/00, G01V 3/06, G08B 21/10

(54) **VERFAHREN UND VORRICHTUNG ZUR EINSCHÄTZUNG DES RISIKOS EINES NATÜRLICH VERURSACHTEN FELS- ODER/UND BERGSTURZES AN EINEM HANG, INSBESONDERE EINEM GEBIRGSHANG**

(30) Priorität: 22.11.2016 DE 102016122467
(71) Anmelder: Geo Explorers AG, 4410 Liestal (CH); InNet Monitoring AG, 6460 Altdorf (CH)
(72) Erfinder: Ebert, Andreas, 4600 Olten (CH)
(74) Vertreter: Patentanwälte Bernhardt / Wolff Partnerschaft mbB

(57) **Zusammenfassung**

Die Erfindung betrifft ein Verfahren zur Einschätzung des Risikos eines natürlich verursachten Fels- und/oder Bergsturzes an einem Hang, insbesondere einem Gebirgshang, wobei mittels Messeinrichtungen (1 - 5) natürlich verursachte Bodenbewegungen an und/oder nahe der Oberfläche des Hanges gemessen werden und dadurch erlangte Messergebnisse an eine Einrichtung (6) zur Auswertung der Messergebnisse übermittelt werden, die dazu eingerichtet ist, die gemessenen Bodenbewegungen in dem Hang zu lokalisieren. Zweckmäßigerweise werden an dem Hang zumindest fünf der Messeinrichtungen (1 - 5) angeordnet und die Messeinrichtungen (1 - 5) umfassen zumindest je einen Sensor zur Messung seismischer Bodenbewegungen, vorzugsweise einen elektromechanischen Wandler zur Messung von Bodenbewegungen, z.B. ein Geophon (8).

Die Erfindung betrifft ferner eine Vorrichtung zur Durchführung des Verfahrens.

## Beschreibung

Die Erfindung betrifft ein Verfahren zur Einschätzung des Risikos eines natürlich verursachten Fels- oder/und Bergsturzes an einem Hang, insbesondere einem Gebirgshang, sowie eine Vorrichtung zur Durchführung des Verfahrens.

Besonders in den Bergregionen der Schweiz, aber auch in anderer Regionen der Erde, bestehen Gefährdungen durch Fels- und Bergstürze, die natürliche Ursachen haben und Menschen und Infrastruktur bedrohen oder direkt betreffen können. Beispiele dafür in der Schweiz sind solche Felsstürze in Randa im Jahr 1991, in Gurtnellen in den Jahren 2006 und 2012, in Preonzo im Jahr 2012 und in der Schöllenschlucht in 2015. Dadurch, dass in verschiedenen Regionen Permafrost abtaut, bilden sich darüber hinaus weitere felssturz- und bergsturzgefährdete Regionen aus. Ein Beispiel dafür ist der Felssturz am Ritzlihorn/Spreitgraben im Jahr 2009.

Zwar werden schon verschiedene Messsysteme zur Bestimmung von Bodenbewegungen eingesetzt. Diese dienen aber dazu, die Reaktion der Umgebung auf einen Eingriff in die Natur, z.B. beim Bergbau, beim Tunnelbau, zum Fracking, zum Aufbau von Geothermieanlagen oder dergleichen, zu überwachen, oder zur Bestimmung von Bodenbewegungen auf bereits als gefährdet erkannten Erdrutschbereichen.

Ferner haben Erdbebendienste verschiedener Länder Messsysteme aufgebaut, mit denen weltweit und lokal Erdbeben überwacht werden. Die Abstände von dafür verwendeten Messstationen liegen in Bereichen größer 10 km.

Der Erfindung liegt die Aufgabe zugrunde, das lokale Risiko von Fels- oder Bergstürzen besser einschätzen zu können.

Erfindungsgemäß wird diese Aufgabe dadurch gelöst, dass mittels Messeinrichtungen natürlich verursachte Bodenbewegungen an und/oder nahe der Oberfläche des Hanges gemessen werden und dadurch erlangte Messergebnisse an eine Einrichtung zur Auswertung der Messergebnisse übermittelt werden, die dazu eingerichtet ist, die gemessenen Bodenbewegungen in dem Hang zu lokalisieren.

Der Erfindung liegt die Erkenntnis zugrunde, dass sich Fels nur dann vom Hang lösen kann, wenn er zuvor durch unzählige kleine Bruch- und Schervorgänge im Hanguntergrund vom Bergmassiv getrennt wird und/oder sich entlang bereits bestehender Trennflächen aufgrund die Trennflächen vergrößernder weiterer kleiner Bruch- und Schervorgänge allmählich löst, dass sich diese kleinen Bruch- und Schervorgänge, die u.a. durch Gravitation, Wassereintritt, Frostsprengung oder Auftauen von Permafrost verursacht werden, messen lassen und dass sich durch Messung der Bruchvorgänge die Wahrscheinlichkeit des Fels- oder/und Bergsturzes bestimmen lässt.

Während die aus dem Stand der Technik bekannten Messsysteme lediglich dazu vorgesehen sind, tatsächlich messbar auftretende Bodenbewegungen größerer Massen zu registrieren, z.B. mittels Radarinterferometrie, Extensometern oder Reißleinen oder anhand von geodätischen Messpunkten, wird durch die Erfindung die Möglichkeit geschaffen, abzuschätzen, ob und wann solche Bodenbewegungen auftreten.

Die Lokalisierung im Hang ist möglich, da im Hang auftretende Gesteinsbrüche und -scherungen Mikroerdbeben verursachen, die Druck- und Scherwellen erzeugen, welche sich im Untergrund des Hangs kugelförmig ausbreiten und detektiert werden können. Aus der Ankunfts- bzw. Laufzeit und -richtung der seismischen Wellen an mindestens drei Sensoren, zusätzlich ggf. aus der Zeitdifferenz der ankommenden Druck- und Schwerwelle, kann die Entfernung zu einem Hyprozentrum, in dem die Gesteinsbrüche und -scherungen erfolgen, bestimmt werden.

Vorteilhaft lassen sich mittels des Verfahrens Stellen im Hang ermitteln, an denen erhöhte Risiken von Destabilisierungen, die Fels- und/oder Bergstürze verursachen können, bestehen. Insbesondere ist eine Häufung von Beben, die zumindest eine gewisse Magnitude erreichen, an einer bestimmten Stelle ein Hinweis darauf, dass es zu einer Felsablösung kommen kann.

In einer Ausführungsform werden die Messeinrichtungen zur Detektierung derart kleiner seismischer Bodenbewegungen vorgesehen, dass sich die genannten Bruch- und Schervorgänge oder/und eine Gesteinsverschiebung im Fels des Hanges ermitteln lassen. Die Messeinrichtungen umfassen zur Messung der Bodenbewegungen vorzugsweise jeweils einen elektromechanischen Wandler, der bevorzugt eine Empfindlichkeit von > 80 V/m/s und/oder eine Eignungsschwingung zwischen 1 und 1000 Hz, vorzugsweise zwischen 10 und 500 Hz, aufweist. Zweckmäßigerweise ist der elektromagnetische Wandler durch ein Geophon, vorzugsweise ein 3-Komponenten-Geophon, gebildet.

Es versteht sich, dass die Messeinrichtungen in dem Hang bevorzugt an verschiedenen Stellen und im Abstand voneinander angeordnet werden.
Zweckmäßigerweise werden an dem Hang pro Quadratkilometer zumindest 0,5 bis 10 der Messeinrichtungen angeordnet. Ferner hat es sich als geeignet erwiesen, das Fels- bzw. Bergsturzrisiko innerhalb eines zusammenhängenden Hangoberflächenabschnitts einer Größe von 0,5 bis 10 km² zu bestimmen.
Vorteilhaft lässt sich auf diese Weise im Hang eine Lokalisierungsgenauigkeit von 5 bis 30 m erreichen.

Zweckmäßigerweise werden die Sensoren der Messeinrichtungen an der Hangoberfläche oder/und in einem Abstand zur Hangoberfläche von < 20 m in dem Hang angeordnet. Sie werden dort vorzugsweise eingesandet oder einbetoniert.

In einer Ausgestaltung der Erfindung werden vor Installation der Messeinrichtungen geophysikalische, geologische und/oder tektonische Eigenschaften des Hangs bestimmt und die Messeinrichtungen abhängig von diesen Eigenschaften am Hang platziert. Dazu wird zweckmäßigerweise mittels einer iterativen Gradienten-Methode aus den Hangeigenschaften eine geeignete Platzierung der Messeinrichtungen am Hang und die Anzahl der für die angestrebte Lokalisierungsgenauigkeit benötigten Messeinrichtungen bestimmt.

Die geophysikalischen, geologischen und/oder tektonischen Eigenschaften umfassen insbesondere die Ausbreitungsgeschwindigkeiten seismischer Wellen und/oder den geologischen Aufbau des Hanguntergrunds. Vorzugsweise werden die Ausbreitungsgeschwindigkeiten derart bestimmt, dass ein dreidimensionales Geschwindigkeitsmodell für den gesamten Hang oder zumindest Abschnitte des Hangs erstellt werden können.
In einer Ausführungsform der Erfindung werden an dem Hang ferner Messungen zur Bestimmung von Hintergrundrauschen ("Noise"), das bei Messung mit den Messeinrichtungen auftritt, durchgeführt.
Ferner kann vorgesehen sein, die räumliche Anordnung und Ausdehnung von geologischen Strukturen, insbesondere Trennflächen aufgrund von Materialkontrasten und Tektonik, zu bestimmen.

Während es vorstellbar wäre, die Messergebnisse in, ggf. regelmäßigen, Zeitabständen von z.B. mehreren Stunden oder Tagen an die Auswerteeinrichtung zu übermitteln, übertragen die Messeinrichtungen in einer Ausgestaltung der Erfindung die Messergebnisse zeitlich direkt und unverzögert an die Auswerteeinrichtung, die vorzugsweise dazu vorgesehen ist, die Messergebnisse zeitlich direkt und unverzögert, besonders bevorzugt in Echtzeit, auszuwerten. Vorteilhaft kann dadurch eine Gefährdung frühzeitig und in verhältnismäßig kurzer Zeit erkannt werden und kurzfristig angemessene Vorkehrungen getroffen werden.

Zweckmäßigerweise ist die Vorrichtung dazu vorgesehen, bei Erkennung einer Gefährdung einen Alarm auszulösen und ggf. an ein Alarmsystem weiterzuleiten.

In einer Ausführungsform der Erfindung ist die Auswerteeinrichtung dazu vorgesehen, ein Beben, insbesondere ein durch die genannten Bruch- oder Schervorgänge im Hanguntergrund erzeugtes Mikrobeben, automatisch bei Überschreitung eines Grenzwerts eines Messparameters zu erkennen. Der Grenzwert wird vorzugsweise in Abhängigkeit von dem genannten Hintergrundrauschen ("Noise") an dem jeweiligen Ort, an dem die Messeinrichtung installiert ist, festgesetzt. Er wird bevorzugt derart vorgesehen, dass er doppelt so groß, vorzugsweise drei Mal so groß, ist wie die zu erwartende Maximalamplitude des Hintergrundrauschens ("Signal-to-noise Ratio" > 2, vorzugsweise > 3). Zweckmäßigerweise ist die Auswerteeinrichtung dazu eingerichtet, Messsignale, die die Beben betreffen, von denjenigen zu trennen, die durch andere seismische Aktivitäten erzeugt werden.

Vorzugsweise werden dabei die für die Beben nicht relevanten Messsignale automatisch herausgefiltert.
Zweckmäßigerweise ist die Auswerteeinrichtung ferner dazu vorgesehen, das Beben mittels eines Gittersuchalgorithmus zu lokalisieren. Ferner ist sie vorzugsweise zur Bestimmung der Magnitude des Bebens eingerichtet. Die Magnitude definiert dabei die Stärke des jeweiligen Bebens und wird anhand der Größe der Amplitude auf dem jeweilig ermittelten Seismogramm bestimmt. Für die hier relevanten Mikrobeben werden dabei Werte von 0 bis -3 erwartet und die Messeinrichtungen und die Auswertungen dementsprechend dazu vorgesehen, Beben solcher Größenordnung messen bzw. auswerten zu können. Mittels des Gittersuchalgorithmus wird zweckmäßigerweise zunächst in einem vordefinierten groben Gitter mit einer iterativen Gradienten-Methode nach einem Bereich gesucht, in dem das gemessene Beben stattfindet, und danach mit einem feineren vordefinierten Gitter in dem Bereich das Beben genauer lokalisiert.
Der genannte Grenzwert kann ein vordefinierter Schwellenwert sein oder durch ein Verhältnis von Kurzzeit-Mittelwert zu Langzeit-Mittelwert gebildet werden, wobei die Mittelwerte vorzugsweise durch Messwertstapelung ermittelt werden ("stacking process").
Es kann vorgesehen sein, dass die ermittelten Messergebnisse anschließend geprüft und, falls notwendig, nachbearbeitet werden.
Die Messergebnisse werden zweckmäßigerweise durch Wellenformanalyse anderen Messergebnissen, die dieselbe geologische Ursache haben, zugeordnet. Vorzugsweise werden die Messergebnisse durch Collapsing einzelnen geologischen Ereignissen, insbesondere Bruchvorgängen im Hang, zugeordnet. Da sich die Bruch- oder Schervorgänge nur mit einem gewissen Fehler lokalisieren lassen, wird beim Collapsing jedem gemessenen Bruch- oder Schervorgang zur Modellierung im Raum ein Elliposid zugeordnet, von dem angenommen wird, dass darin der Bruch- oder Schervorgang stattgefunden hat. Werden mehreren Bruch- oder Schervorgänge, deren Elliposide denselben Ort im Raum umfassen, miteinander verglichen, kann jeder Bruch- oder Schervorgänge so im jeweiligen Elliposid angeordnet werden, dass dies zu einem geologischen Bruchmechanismus passt. So werden sämtliche der Bruch- oder Schervorgänge z.B. in einem Punkt, auf einer Linie der auf einer Fläche angeordnet.

In einer Ausführungsform der Erfindung werden mittels der Auswerteeinrichtung die Bodenbewegungen, vorzugsweise durch Wellenformanalyse, analysiert und anderen, bereits gemessenen Bodenbewegungen zugeordnet ("Clustering") und/oder durch Collapsing geologischen Bruchmechanismen und ggf. geologischen Strukturen im Hang zugeordnet.
In einer besonders bevorzugten Ausgestaltung der Erfindung wird die Auswertung der Messergebnisse unter Berücksichtigung von Sekundärdaten, vorzugsweise Informationen über Strukturgeologie im Bereich des Hanges und/oder aktuelle und/oder aufgezeichnete Informationen zum Wetter im Bereich des Hanges, insbesondere Temperatur, Luftdruck, Niederschlag oder/und Windstärke, durchgeführt.
Vorteilhaft lassen sich dadurch die mittels der Messeinrichtungen erlangten Informationen hinsichtlich des Felssturz- bzw. Bergsturzrisikos besser beurteilen.

Das Fels- bzw. Bergsturzrisiko am Hang kann z.B. mit der Gutenberg-Richter-Gesetzmäßigkeit ermittelt werden. Insbesondere lassen sich in dem Hang lokale Gefahrenwerte seismischer Aktivität, d.h. Bereiche mit erhöhtem Fels- und/oder Bergsturzrisiko, lokalisieren.

In einer Ausführungsform der Erfindung umfasst die Vorrichtung neben den Sensoren zumindest einen Datenspeicher zum Speichern der Messergebnisse, der vorzugsweise als Datenlogger ausgebildet ist und der die Messergebnisse zu einem vordefinierten Rhythmus, vorzugsweise 100 - 3000 Hz, besonders bevorzugt 200 - 2000 Hz, aufnimmt und speichert. Der Datenspeicher kann dazu vorgesehen sein, die mittels der Sensoren erzeugten Signale in Daten, insbesondere eine digitale Zeitreihe, umzuwandeln. Zweckmäßigerweise weist der Datenspeicher eine Einrichtung zur Datenübertragung auf, insbesondere zur Versendung der Messergebnisse an die Auswerteeinrichtung und/oder einen Datenspeicher, beispielsweise per Funk, z.B. GSM, oder über Telekommunikationsleitungen.
Zweckmäßigerweise umfasst die Vorrichtung, ggf. jede der Messeinrichtungen, eine elektrische Energiequelle, die vorzugsweise eine Batterie und ggf. eine Einrichtung zum Aufladen der Batterie, beispielsweise ein Photovoltaikmodul und/oder ein Windrad, umfasst.

Darüber hinaus können die Messeinrichtungen mit einer Einrichtung zur Messzeitsynchronisierung, z.B. einem GPS-Empfänger, versehen sein. In der bevorzugten Ausführungsform der Erfindung umfasst die erfindungsgemäße Vorrichtung eine Wetterstation, insbesondere zur Messung von Niederschlag, Luftdruck, Temperatur und/oder Windstärke und/oder-richtung.
Zweckmäßigerweise werden die Messergebnisse mit den gemessenen Wetterdaten korreliert.

In einer weiteren Ausführungsform der Erfindung werden die Messergebnisse mit den geophysikalischen, geologischen und/oder tektonischen Eigenschaften des Hangs, die wie oben beschrieben vor Installation der Messeinrichtungen ermittelt werden, korreliert.

Die Erfindung wird nachfolgend anhand eines Ausführungsbeispiel und der beiliegenden Zeichnungen, die sich auf dieses Ausführungsbeispiel beziehen, näher erläutert. Es zeigen:
- Fig. 1: einen Hang, der mit einer erfindungsgemäßen Vorrichtung versehen ist, und
- Fig. 2: schematisch den Aufbau der erfindungsgemäßen Vorrichtung.

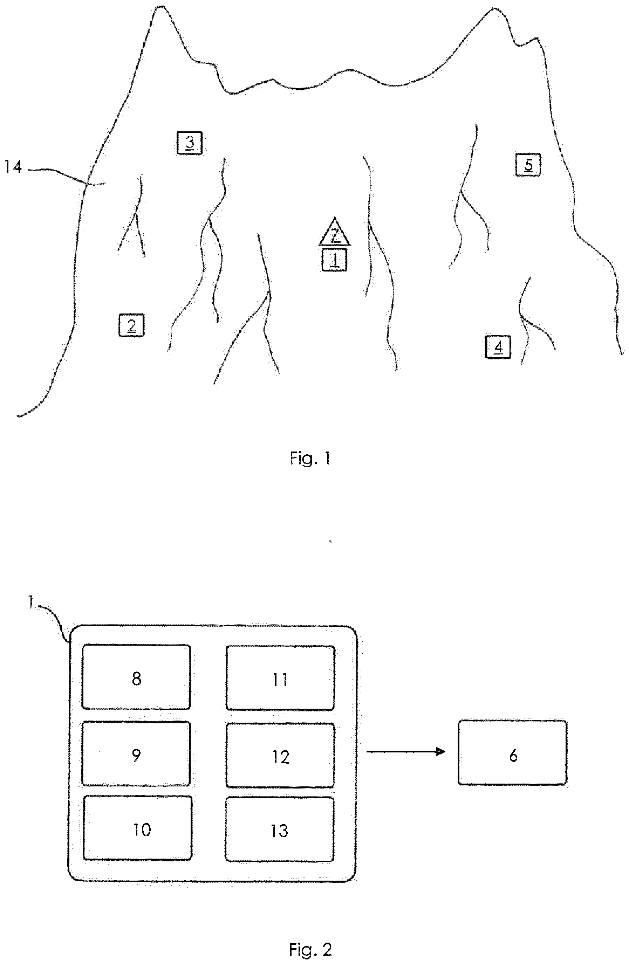

In Fig. 1 ist ein Hang 14 eines Bergmassivs aus Fels dargestellt, in dem eine erfindungsgemäße Vorrichtung angeordnet ist, die fünf im Abstand voneinander angeordnete erfindungsgemäße Messeinrichtungen 1 - 5 umfasst und eine zusammenhängende Hangoberfläche einer Größe von etwa 5 km² aufweist. Jede der Messeinrichtungen 1 - 5 weist ein in Fig. 2 schematisch dargestelltes 3-Komponenten-Geophon 8 auf, das jeweils in einer Tiefe von 1 -2 m im Felsuntergrund des Hangs 14 eingelassen ist. Wie in Fig. 2 anhand der Messeinrichtung 1 gezeigt ist, ist jede der Messeinrichtungen 1 - 5 neben dem genannten 3-Komponenten-Geophon 8 mit einer Batterie 9 zur Versorgung der Messeinrichtungen 1 - 5 mit elektrischer Energie, die mittels eines Photovoltaikmoduls 10 geladen werden kann, einem Datenlogger 11, der zur regelmäßigen Speicherung von mit der Messeinrichtung 1 ermittelten Messergebnissen vorgesehen ist, einen GPS-Empfänger 12 zur Zeitsynchronisierung mit den jeweilig anderen Messeinrichtungen sowie einer Sendeeinrichtung 13, mittels derer, beispielsweise per Funk, die ermittelten Messergebnisse an eine Auswerteeinrichtung 6 gesendet werden können.
Abweichend von dem hier erläuterten Ausführungsbeispiel könnte die Vorrichtung für die Messeinrichtungen 1 - 5 lediglich einen einzigen Datenlogger 11 umfassen, der mit den Messeinrichtungen 1 - 5 so verbunden ist, dass diese die Messergebnisse auf ihm speichern können. In diesem Fall wäre der Datenlogger 11 mit einer Sendeeinrichtung 13 versehen, um die Messergebnisse an die Auswerteeinrichtung 6 weiterzuleiten.

Unmittelbar neben der Messeinrichtung 1 ist eine Wetterstation 7 angeordnet, die dazu vorgesehen ist, die Temperatur, den Luftdruck, den Niederschlag sowie die Windstärke an dem Hang 14 zu messen und die jeweiligen Informationen dazu zu speichern und/oder an die Auswerteeinrichtung 6 zu übermitteln.

Vor Anordnung der Messeinrichtungen 1 - 5 am Hang 14 sind geophysikalische, geologische und tektonische Eigenschaften des Hangs 14 ermittelt worden, wobei insbesondere Ausbreitungsgeschwindigkeiten seismischer Wellen sowie der geologische Aufbau des Hanguntergrunds untersucht worden sind. Abhängig von den dabei ermittelten Ergebnissen ist anhand eines Gittersuchalgorithmus mit einer iterativen Gradientenmethode, insbesondere dem CG-Verfahren (Verfahren der konjugierten Gradienten) die Anzahl der notwendigen Messsonden sowie deren Platzierung im Hang 14 ermittelt worden. Fermer werden zur Platzierung der Messeinrichtungen 1 - 5 vorzugsweise Orte ausgewählt, die vergleichsweise ruhig, d.h. an denen wenig Hintergrundrauschen ("Noise") auftritt.

Vor Inbetriebnahme der Vorrichtung wird für jede Messeinrichtungen 1 - 5 eine Analyse der aufgenommenen seismischen Wellen durchgeführt, um das Hintergrundrauschen ("Noise") zu bestimmen, das aufgrund von Umwelteinflüssen gemessen wird, ohne dass im Fels des Hangs 14 Bruchvorgänge, deren Ermittlung beabsichtigt ist, stattfinden. Abhängig von den dabei ermittelten Informationen werden Grenzwerte festgesetzt, bei deren Überschreiten davon ausgegangen wird, dass es im Fels des Hangs 14 zu den relevanten Bruchvorgängen kommt.
Die Auswerteeinrichtung 6 ist dazu eingerichtet, einen Gittersuchalgorithmus ablaufen zu lassen, mittels dessen sich die jeweiligen Bruchereignisse im Hang 14 lokalisieren lassen. Die jeweilige Messeinrichtung 1 - 5 kann dabei automatisch die Magnitude der ermittelten Bodenbewegung bestimmen.

Darüber hinaus kann die Auswerteeinrichtung 6 dazu vorgesehen sein, die einzelnen gemessenen Bruchereignisse, die den Grenzwert überschreiten, durch Wellenformanalyse bestimmten im Hang 14 aufgefundenen Bruchbereichen zuzuordnen. Ferner ist es möglich, die jeweiligen Bruchbereiche, z.B. durch Triangulation, im Hang 14 zu lokalisieren.
Dabei kann eine erhöhte Rate von Bruchvorgängen in einem bestimmten Bereich oder an einer bestimmten Stelle einen Hinweis darauf geben, dass ein vergrößertes Risiko von Ablösen von Fels und damit eines Felssturzes besteht.

Dabei kann vorgesehen sein, die mittels der Messeinrichtungen 1 - 5 aufgenommenen Messergebnisse mit den Messergebnissen der Wetterstation 7 zu korrelieren.

Darüber hinaus kann eine Korrelation mit den Ergebnissen der geophysikalischen, geologischen und tektonischen Untersuchungen des Hangs 14, die vor Anordnung der Messeinrichtungen 1 - 5 durchgeführt worden ist, vorgesehen sein.

Darüber hinaus kann die Auswerteeinrichtung 6 mit einem Alarmmechanismus versehen sein, der ein Alarmsignal versendet, wenn ein konkretes Felssturzrisiko besteht.

## Patentansprüche

1. Verfahren zur Einschätzung des Risikos eines natürlich verursachten Fels- oder/und Bergsturzes an einem Hang, insbesondere einem Gebirgshang, wobei mittels Messeinrichtungen (1 - 5) natürlich verursachte Bodenbewegungen an und/oder nahe der Oberfläche des Hanges gemessen werden und dadurch erlangte Messergebnisse an eine Einrichtung (6) zur Auswertung der Messergebnisse übermittelt werden, die dazu eingerichtet ist, die gemessenen Bodenbewegungen in dem Hang zu lokalisieren.

2. Verfahren nach Anspruch 1,
**dadurch gekennzeichnet,**
**dass** an dem Hang zumindest fünf der Messeinrichtungen (1 - 5) angeordnet werden und die Messeinrichtungen (1 - 5) zumindest je einen Sensor zur Messung seismischer Bodenbewegungen, vorzugsweise einen elektromechanischen Wandler zur Messung von Bodenbewegungen, z.B. ein Geophon (8), umfassen.

3. Verfahren nach Anspruch 1 oder 2,
**dadurch gekennzeichnet,**
**dass** die Messeinrichtungen (1-5) die Messergebnisse zeitlich direkt und unverzögert an die Auswerteeinrichtung (6) übertragen und die Auswerteeinrichtung (6) die Messergebnisse vorzugsweise zeitlich direkt und unverzögert, vorzugsweise in Echtzeit, auswertet.

4. Verfahren nach einem der Ansprüche 1 bis 3,
**dadurch gekennzeichnet,**
**dass** die Messeinrichtungen (1-5) und/oder die Auswerteeinrichtung (6) zur Detektierung derart kleiner Bodenbewegungen vorgesehen werden, dass sich eine Bruchbildung oder/und eine Gesteinsverschiebung im Fels des Hanges auffinden, vorzugsweise im Hang lokalisieren, lässt.

5. Verfahren nach einem der Ansprüche 1 bis 4,
**dadurch gekennzeichnet,**
**dass** mittels der Auswerteeinrichtung (6) die mittels der Messeinrichtungen (1-9) ermittelten Bodenbewegungen, vorzugsweise durch Wellenformanalyse, analysiert werden sowie anderen, bereits gemessenen Bodenbewegungen und/oder durch Collapsing einzelnen geologischen Strukturen des Hangs und/oder geologischen Bruchmechanismen zugeordnet werden.

6. Verfahren nach einem der Ansprüche 1 bis 5,
**dadurch gekennzeichnet,**
**dass** die Auswertung der Messergebnisse unter Berücksichtigung von Sekundärdaten, vorzugsweise Informationen über Strukturgeologie im Bereich des Hanges und/oder Informationen über aktuelles und/oder aufgezeichnetes Wetter im Bereich des Hanges, durchgeführt wird.

7. Verfahren nach einem der Ansprüche 1 bis 6,
**dadurch gekennzeichnet,**
**dass** Sensoren der Messeinrichtungen (1-5) an der Hangoberfläche oder/und in einem Abstand zur Hangoberfläche von < 20 m in dem Hang angeordnet werden.

8. Verfahren nach einem der Ansprüche 1 bis 7,
**dadurch gekennzeichnet,**
**dass** an dem Hang pro Quadratkilometer zumindest 0,5 bis 10 der Messeinrichtungen (1 - 5) angeordnet werden.

9. Verfahren nach einem der Ansprüche 1 bis 8,
**dadurch gekennzeichnet,**
**dass** die Felssturzwahrscheinlichkeit innerhalb eines zusammenhängenden Hangoberflächenabschnitts einer Größe von 0,5 bis 10 km² bestimmt wird.

10. Vorrichtung zur Bestimmung der Wahrscheinlichkeit eines natürlich verursachten Felssturzes an einem Hang, insbesondere einem Gebirgshang, wobei Einrichtungen (1 - 5) zur Messung natürlich verursachter Bodenbewegungen an und/oder nahe der Oberfläche des Hanges und einer Einrichtung (6) zur Auswertung der mittels der Messungseinrichtungen (1 -5) gemessenen Messergebnisse, die dazu eingerichtet ist, die gemessenen Bodenbewegungen in dem Hang zu lokalisieren.

11. Vorrichtung nach Anspruch 10,
**dadurch gekennzeichnet,**
**dass** die Vorrichtung zumindest fünf der Messungseinrichtungen (1 - 5) umfasst und die Messeinrichtungen (1 - 5) zumindest je einen Sensor, vorzugsweise mindestens zwei Sensoren, zur Messung seismischer Bodenbewegungen, vorzugsweise einen elektromechanischen Wandler zur Messung von Bodenbewegungen, z.B. ein Geophon (8), umfassen.

12. Vorrichtung nach Anspruch 10 oder 11,
**dadurch gekennzeichnet,**
**dass** die Messeinrichtungen (1-5) zur zeitlich direkten und unverzögerten Informationsübertragung an die Auswerteeinrichtung (6) vorgesehen sind, wobei die Auswerteeinrichtung (6) vorzugsweise zur zeitlich direkten und unverzögerten Auswertung der Messergebnisse eingerichtet ist.

13. Vorrichtung nach einem der Ansprüche 10 bis 12,
**dadurch gekennzeichnet,**
**dass** an dem Hang pro Quadratkilometer zumindest 0,5 bis 10 der Messeinrichtungen (1 - 5) angeordnet sind.

14. Vorrichtung nach einem der Ansprüche 10 bis 13,
**dadurch gekennzeichnet,**
**dass** die Vorrichtung zur Bestimmung der Felssturzwahrscheinlichkeit innerhalb eines zusammenhängenden Hangoberflächenabschnitts einer Größe von 0,5 bis 10 km² eingerichtet ist.
